# EUROPÄISCHE PATENTANMELDUNG

(11) **EP 0 849 357 A2**
(43) Veröffentlichungstag der Anmeldung: **24.06.1998**
(21) Anmeldenummer: 97120049.8
(22) Anmeldetag: 15.11.1997
(51) Int. Cl.: C12C 7/04

(54) **Verfahren zur Herstellung von Bier**

(30) Priorität: 20.12.1996 DE 19653347
(71) Anmelder: Weisser, Horst, Univ.-Prof. Dr.-Ing., 85350 Freising-Weihenstephan (DE); Back, Werner, Univ.-Prof. Dr.-Ing., 85350 Freising-Weihenstephan (DE); HOSOKAWA ALPINE Aktiengesellschaft, D-86199 Augsburg (DE)
(72) Erfinder: Lotz, Markus, 85354 Freising (DE); Krottenthaler, Martin Dr., 84032 Altdorf (DE); Degant, Oskar, 86477 Adelsried (DE)
(74) Vertreter: Charrier, Rolf, Dipl.-Ing.

(57) **Zusammenfassung**

Die Erfindung betrifft ein Verfahren zur Herstellung von Bier, das den Verfahrensschritt des Maischens von geschroteten Maischprodukten umfaßt. Hierbei wird ein Gemisch aus geschroteten Maischprodukten und Wasser erhitzt. Um die Schaumhaltbarkeit des Biers zu verbessern, wird der Maische bei einer Temperatur zwischen 50° C + 70° C etwa 5 % Mehl zugesetzt, das aus proteinangereichertem Darrmalz gewonnen wurde.

## Beschreibung

Die Erfindung betrifft ein Verfahren zur Herstellung von Bier nach dem Oberbegriff des Anspruches 1.

Das klassische Verfahren der Bierherstellung besteht darin, das Darrmalz grob zu schroten und sodann zur Bildung einer Maische mit Wasser zu versetzen. Das Malz liefert dabei den vergärbaren Extrakt der Bierwürze.

Für die Qualität des Bieres hinsichtlich Geschmack, Farbe, Schaum und weiterer chemischer und physikalischer Biereigenschaften ist der Vorgang des Mälzens von erheblicher Bedeutung.

Da das Ausgangsprodukt für das Mälzen jedoch ein Naturprodukt ist, sind Schwankungen in der Gerstenqualität aufgrund unterschiedlicher Gerstensorten, Anbaugebieten und den jeweiligen Witterungseinflüssen unvermeidlich. Daraus ergeben sich Unterschiede im Stärkegehalt und im Proteingehalt sowie in der Beschaffenheit der das Korn umschließenden Spelzen.

Derartige Schwankungen können sich auf die Qualität der späteren Biere auswirken. Schlechte Qualität der Malze bedeuten zudem auch eine weniger wirtschaftliche Verarbeitung mit höheren Kosten.

In einem gewissen Umfang kann in den Mälzereien durch Variation des Mälzungsprozesses die Qualität einer Charge Braugerste positiv beeinflußt werden. Dies ist jedoch nur in eingschränktem Maße möglich und es können keine konstanten Malzqualitäten erzeugt werden. Schließlich kann auf das fertig gedarrte Malz auf biochemischem Wege nur noch bedingt eingewirkt werden.

Selbst bei gutgelösten Malzen führt die grobe Schrotung dazu, daß nicht alle extrakthaltigen Bestandteile in die Würze gelöst werden können. Aufgrund dieser unvollständigen Lösung verbleiben wertvolle extrahierbare Bestandteile im Treber zurück.

Aufgrund des deutschen Reinheitsgebots wurden in der Vergangenheit erste Versuche unternommen, um durch rein physikalische Vorgänge die Eigenschaften des Malzes gezielt steuern zu können.

Professor Schöffel, Institut für Maschinen und Apparatekunde, Weihenstephan, TU München beschrieb im Jahre 1972 ein Verfahren zur Pulverisierung von Malz. Ziel war es, die Lösung von schlecht lösbarem Malz durch einen physikalischen Aufschluß zu verbessern. Man war davon ausgegangen, daß im Gegensatz zu grob geschrotetem Malz ein vermahlenes Malz im Maischebottich besser ausgelöst werden kann und somit mehr Extrakt für die Würze gewonnen werden kann. Hierzu wird verwiesen auf Brauwissenschaft, Jahrgang 25/Nr.10, 20. Oktober 1972, Seiten 301 - 312.

In einer weiteren Veröffentlichung von H. Kieninger, Institut für Technologie der Brauerei I, Weihenstephan, TU München wurde die Gewinnung von Würze aus Pulvermalzen aus drei getrennten Fraktionen, dem Endospermmehl , dem Randzonenmehl und den Spelzen beschrieben. Hierzu wird verwiesen auf Brauwelt, Jahrgang 112/Nr. 75, 20. Oktober 19972, Seiten 1535 - 1540. Dort wurden dies Auswirkungen der drei Malzfraktionen auf die Bierqualität erforscht. Dort findet sich die Aussage, daß die Schaumhaltbarkeit bei Bieren aus Randzonenmehl etwas geringer ist als beim Endospermmehl.

Ein wesentliches Qualitätsmerkmal eines Bieres ist die Schaumhaltbarkeit. In Ländern, in welchen das Reinheitsgebot nicht gilt, wird die Schaumhaltbarkeit durch die Zugabe von Schaumstabilisatoren verbessert. Das deutsche Reinheitsgebot läßt jedoch die Zugabe künstlicher Schaumstabilisatoren nicht zu.

Es besteht die Aufgabe, das Verfahren zur Herstellung von Bier so zu verbessern, daß unter Einhaltung des deutschen Reinheitsgebots die Schaumhaltbarkeit verbessert wird. Gelöst wir diese Aufgabe mit den Merkmalen des Anspruches 1. Vorteilhafte Ausgestaltungen sind den Unteransprüchen entnehmbar.

Jüngste Untersuchungen haben ergeben, daß es möglich ist, Darrmalz zu zermahlen und zu fraktionieren. Hierbei wird eine erste Feingutfraktion erhalten, die einen hohen Extraktgehalt mit wenig Eiweiß und niedrigem Polyphenol- und β-Glucan-Wert aufweist. Außerdem wird eine weitere Feingutfraktion erhalten, die bei niedrigem Polyphenol- und β-Glucan-Werten einen hohen Eiweißgehalt von etwa 13 - 20 % i. T.r. aufweist. Die eine Feingutfraktion stammt hierbei übrwiegend aus dem Endosperm, während die weitere Feingutfraktion überwiegend von den Randzonen des Gersterkorns stammt. Diese weitere Feingutfraktion wird nachfolgend als Proteinfraktion bezeichnet.

Aufgrund der Aussage von Kieninger war nicht zu erwarten, daß die Zugabe von geringen Mengen der Proteinfraktion zu einer deutlichen Verbesserung der Schaumhaltbarkeit führt.

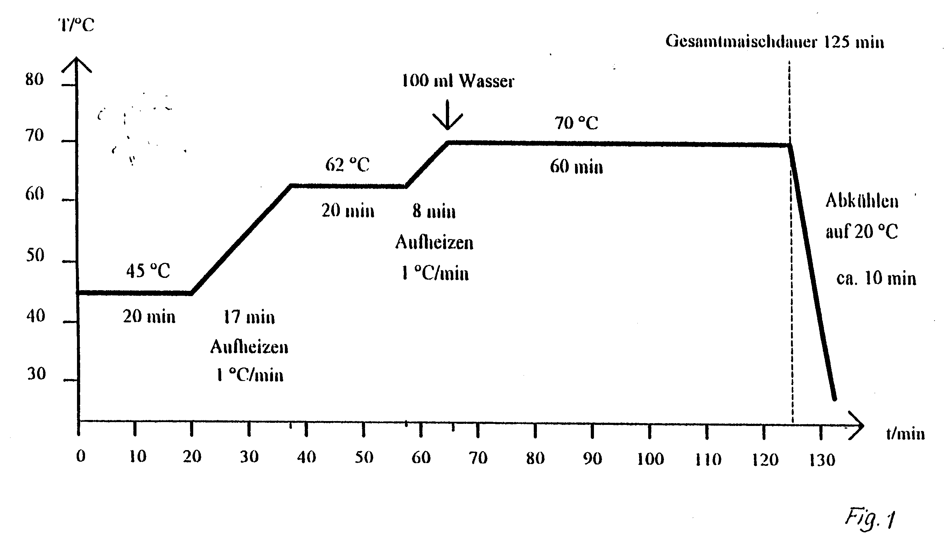

Die Durchführung der Maischarbeit wird nachfolgend anhand eines Ausführungsbeispiels beschrieben. Hierbei wurde ein Infusionsmaischverfahren mit den üblichen Temperaturrasten gewählt (Fig. 1). Die Proteinfraktion wird dabei erst zu einem späteren Maischabschnitt zugesetzt, um den Eiweißabbau dieser Fraktion zu verkürzen. Dadurch können mehr schaum-positive Eiweißstoffe in die Würze eingebracht werden. Diese Zugabe erfolgt bevorzugt bei einer Temperatur zwischen 50 und 70 ⁰C. Die zugegebene Menge der Proteinfraktion, bezogen auf die Gesamtschüttung betrug 5%.

Durch diesen Zusatz konnte eine deutliche Schaumverbesserung im Vergleich zu einem Bier ohne Zusatz einer Malzmehlfraktion gemessen werden. Dabei wurden beim Nurschrotbier 125 Schaumpunkte nach Ross & Clark und eine Schaumzerfallszeit von 233 sec. nach NIBEM gemessen. Der Zusatz von 5% der Proteinfraktion erbrachte eine Schaumqualitätsverbesserung auf 129 Schaumpunkte nach Ross & Clark, sowie eine Schaumzerfallszeit von 244 sec. nach NIBEM

## Patentansprüche

1. Verfahren zur Herstellung von Bier, das den Verfahrensschritt des Maischens von geschroteten Maischprodukten umfaßt, bei dem das Gemisch aus geschroteten Maischprodukten und Wasser erhitzt wird, ***dadurch gekennzeichnet, daß*** der Maische bei erhöhter Temperatur geringe Mengen von Mehl zugesetzt wird, das aus proteinangereichertem Darrmalz gewonnen wurde.

2. Verfahren nach Anspruch 1, ***dadurch gekennzeichnet, daß*** das Mehl bei einer Maischetemperatur zwischen 50° C und 70° C zugesetzt wird.

3. Verfahren nach Anspruch 1 oder 2, ***dadurch gekennzeichnet, daß*** der Mehlanteil, bezogen auf die Gesamtschüttung der geschroteten Maischprodukte , etwa 5 % beträgt.
